# EUROPEAN PATENT APPLICATION

(11) **EP 3 089 086 A1**
(43) Date of publication of application: **02.11.2016**
(21) Application number: 14874423.8
(22) Date of filing: 12.12.2014
(51) Int. Cl.: G06Q 10/06, G05B 19/418

(54) **WORK MANAGEMENT SYSTEM**

(30) Priority: 27.12.2013 JP 2013270661
(71) Applicant: Nippon Yusen Kabushiki Kaisha, Tokyo 100-0005 (JP)
(72) Inventor: ISHIZAWA Naotaka, Tokyo 100-0005 (JP); KUMAI Hideyuki, Tokyo 100-0005 (JP)
(74) Representative: Hoffmann Eitle
(86) International application number: PCT/JP2014/083024
(87) International publication number: WO 2015/098577

(57) **Abstract**

Provided is a system in which content and a progress of a work are estimated based on position information and time information of a worker, and accuracy and productivity of a work performed by the worker, reasonableness of a break period of time taken by a worker, proficiency of a worker in the work, and productivity of the worker for each time zone are evaluated.

A work progress situation management system includes a worker terminal 1 including a position measurer, an inputter/outputer, a storage, and a communicator and a server 2 including an inputter/outputer, a storage, and a communicator, and at least one of the server 2 and the worker terminal 1 includes a work instruction storage T4 that stores work instruction information including position information before a work of work content to be performed by a worker starts, position information of an intermediate process, and position information after the work is completed and a work content estimator M1 that determines content and a progress situation of the work based on the work instruction information and position information of the worker terminal, and writes information related to the progress situation of the work in the work instruction storage T4.

## Description

### TECHNICAL FIELD

The present invention relates to a technical field of a management system for a work that a worker moves to an object and moves the object (automobile) to the destination, for example, loads automobiles into an automobile carrier or the like.

### Background Art

In recent years, in order to automatically record a work period of time of a worker who works outdoors, the worker carries a terminal having a global positioning system (GPS) function such as a mobile phone, it is determined whether or not the trajectory of the worker obtained from the GPS has entered a designated range that is defined in advance, and work recording is performed.

Further, techniques of managing entering and leaving a specific region, for example, by recognizing an ID code and a time of each person through communication between tags worn on a plurality of persons and a transceiver installed on a gate, detecting entering and leaving a specific region through a server using a positioning function

(for example, a GPS) with which a mobile terminal carried by a person is equipped, and acquiring information of an ID card held by a user or the like through a reader installed in an entrance of a room or the like have been proposed.

### CITATION LIST

### PATENT LITERATURE

Patent Literature 1: JP 2006-180242 A
Patent Literature 2: JP 2009-288828 A
Patent Literature 3: JP 2013-122670 A

### SUMMARY OF INVENTION

### TECHNICAL PROBLEM

However, in the techniques disclosed in the above-mentioned literatures, there is a limitation to a utilization range of position information of a worker or the like. It is a problem to be solved by the present invention to evaluate content and a progress of a work based on position information and time information of a worker managed by a supervisor and evaluate accuracy and productivity of a work performed by a worker, reasonableness of a break period of time taken by a worker, proficiency of a worker in work, and productivity of a worker for each time zone.

### SOLUTION TO PROBLEM

In order to solve the object, a work progress situation management system includes a worker terminal including a position measurer, an inputter/outputer, a storage, and a communicator and a server including an inputter/outputer, a storage, and a communicator, and at least one of the server and the worker terminal includes a work instruction storage that stores work instruction information including position information before a work of work content to be performed by a worker starts, position information of an intermediate process, and position information after the work is completed and a work content estimator that determines content and a progress situation of the work based on the work instruction information and position information of the worker terminal, and writes information related to the progress situation of the work in the work instruction storage.

### ADVANTAGEOUS EFFECTS OF INVENTION

According to the present invention, a worker has only to perform a work according to a work instruction, and with no special input, a supervisor can understand whether or not a work instruction has been given, whether or not a worker is skilled at a work, how productivity is, or whether or not a break has been sufficiently taken.

### BRIEF DESCRIPTION OF DRAWINGS

Fig. 1 is a diagram illustrating a server and a worker terminal constituting the present invention.
Fig. 2 is a diagram illustrating a table configuration example of a work instruction storage.
Fig. 3 is a diagram illustrating a table configuration example of a standard work storage.
Fig. 4 is a flowchart of a work content estimator.
Fig. 5 is a diagram illustrating a table configuration example of a position information storage.
Fig. 6 is a schematic diagram illustrating a determination method of a work start determination step.
Fig. 7 is a diagram illustrating a table configuration example of a worker management information storage.
Fig. 8 is a flowchart of a work place/content error detector and instructor.
Fig. 9 is a diagram illustrating a table configuration example of a worker evaluation information storage.
Fig. 10 is a diagram illustrating a table configuration example of an hourly evaluation information storage.
Fig. 11 is a diagram illustrating a configuration of a break indicator.

### DESCRIPTION OF EMBODIMENTS

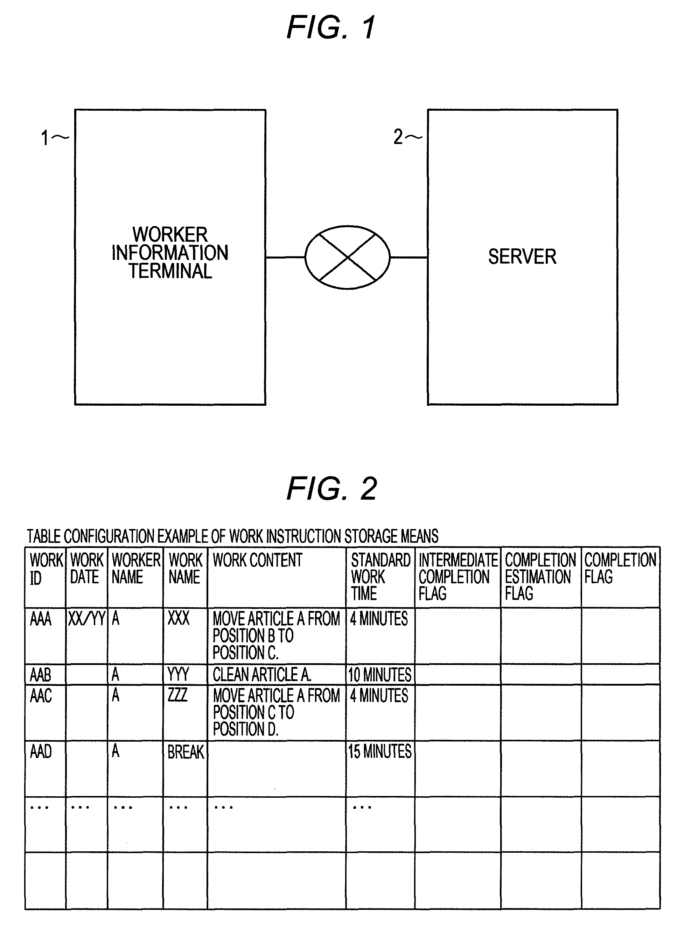

In the present invention, a worker terminal includes at least a communicator, a storage, an inputter/outputer, and a position measurer. In the present invention, a server includes at least a communicator, a storage, and an inputter/outputer. The present invention is implemented by at least one or more worker terminals and the server as illustrated in Fig. 1.

### (Work instruction storage)

At least one of the server and the worker terminal includes a work instruction storage. As illustrated in Fig. 2, the work instruction storage stores a work content which a worker is instructed to do. The work content includes, for example, a work ID, a work date, a name of a worker who is to do a work, a work content, a standard period of time necessary for a work (a standard work period of time), a completion estimation flag, and a completion flag. The work instruction storage is configured with a table including these items.

At least one of the server and the worker terminal includes an inputter/outputer for the work instruction storage, and a supervisor inputs information of a work which the worker is instructed to do to the work instruction storage using the inputter/outputer.

A break may also be written in the work instruction storage as a work instruction. Giving employees a break is one of obligations of employers, and a break is to prevent industrial accidents before they happen and increase efficiency of the worker. A break period of time that is given as a work instruction is decided according to laws and regulations or policies of employers.

### (Standard work storage)

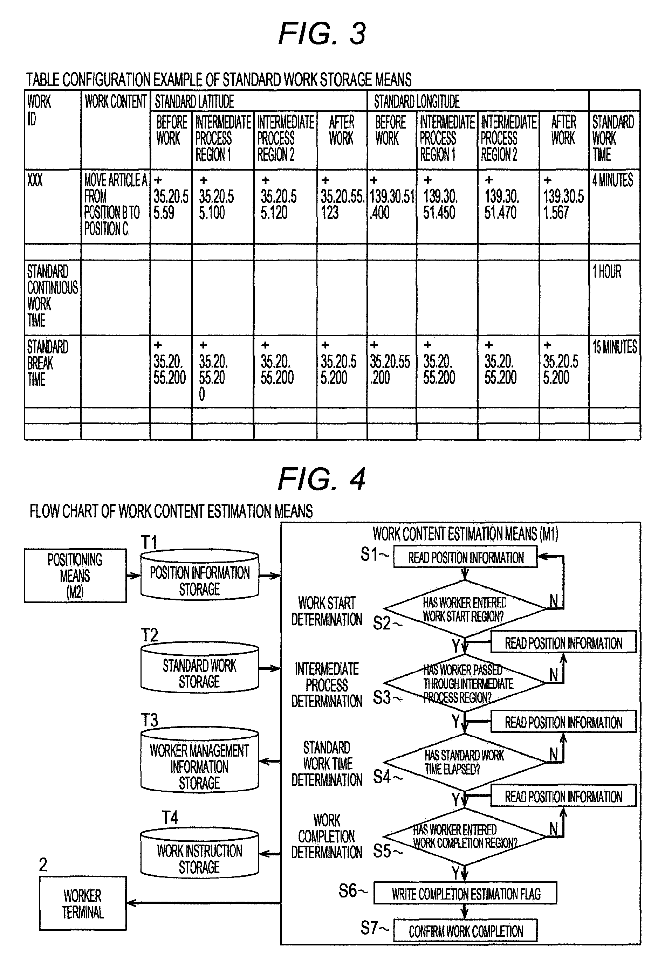

At least one of the server and the worker terminal includes a standard work storage. As illustrated in Fig. 3, the standard work storage stores at least a work ID of each work, work content, position information configured with a longitude and a latitude of a region in which the work has to be positioned at each of the stages of "before work starts," "at the time of intermediate process," and "after a work is completed," and a standard work period of time for all routine works that are typically performed by the worker. One or more pieces of position information of a longitude and a latitude at the time of intermediate process may be stored. Fig. 3 illustrates a table configuration example of the standard work storage. The standard work storage may store a period of time normally elapsed until an intermediate process after a work starts as a standard work period of time of up to the intermediate process.

At least one of the server and the worker terminal includes an inputter/outputer for the standard work storage, and the supervisor inputs information of each routine work to the standard work storage using the inputter/outputer.

### (Position measurer)

The worker terminal includes a position measurer. The position measurer includes a position information detector equipped with, for example, a GPS receiver and position calculation software that estimates the position of the worker at predetermined sampling intervals based on position information acquired through the position information detector. For example, the position information of the worker is calculated at intervals of sampling periods of time (one minute). The period of time nay be 5 minutes or may be 30 seconds. The position measurer includes a sampling period of time setter. The position measurer writes position information for each sampling period of time in a position information storage.

### (Position information storage)

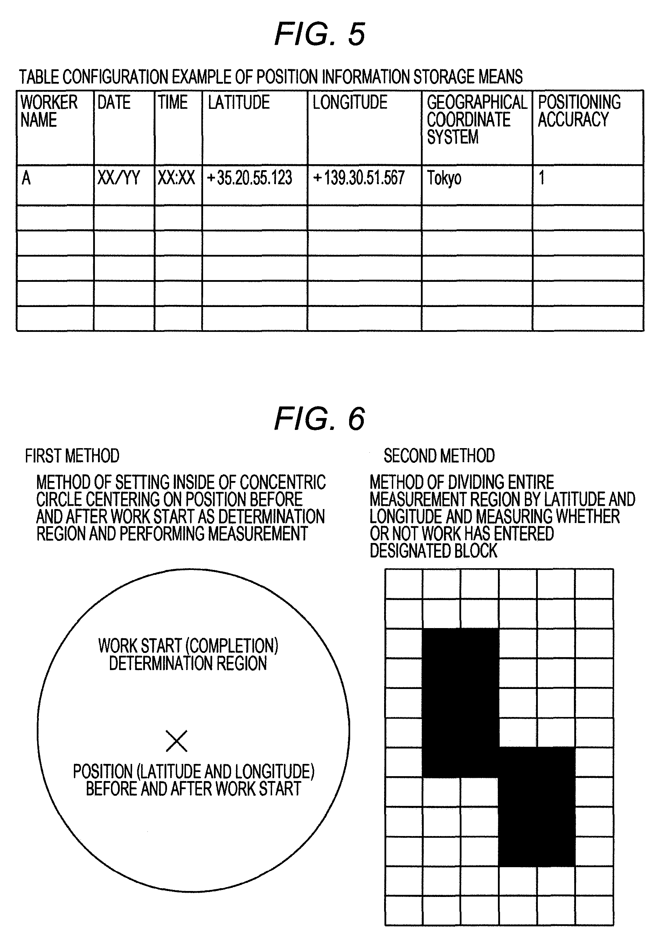

The worker terminal includes a position information storage. The position information storage stores the position information of the worker acquired through the position measurer. In other words, a date, a time, and the position information of the worker (a latitude, a longitude, a geographical coordinate system, and positioning accuracy) are stored. Fig. 5 illustrates a table configuration example of the position information storage. The worker terminal transmits the position information to the server as well. The server receives the position information, and stores the position information in the position information storage of the server for each worker.

### (Work content estimator)

Fig. 4 is a flowchart for estimating the work content based on the position information. At least one of the server and the worker terminal includes a work content estimator. The work content estimator includes steps of reading the position information, performing work start determination, performing intermediate process determination, performing standard work period of time determination, performing work completion determination, and confirming work completion as illustrated in Fig. 4. An order of the respective steps is not fixed unless it is particularly designated below, and the respective steps may be simultaneously performed. The respective steps will be described below.

### (Work content estimator - position information reading and work start determination)

The work content estimator includes a work start determination step of comparing the position information of the worker with position information of a region in which the worker has to be positioned before all works which the worker is instructed to do start and determining whether or not the worker has started one work.

In order to give an instruction to the worker, the work content estimator reads position information of a region (a work start region) in which the worker has to be positioned before each work starts for all works stored in the work instruction storage. The work content estimator repeatedly reads the position information of the worker from the position information storage until the worker is determined to have entered the work start region of one work which the worker is instructed to do. When the position of the worker is determined to be in the work start region of the first work, the work content estimator recognizes a work corresponding to the region in which the worker has to be positioned as a work that is performed by the worker from now, and manages the progress of a subsequent work.

The determination as to whether or not the worker stays in a predetermined region is performed as follows. For example, as in a first method illustrated in Fig. 6, a region within a circle centering on a position before a work starts is set as the work start region. As in a second method illustrated in Fig. 6, the work start region may be set in a mesh form. An arbitrary region may be also set by combining latitude information and longitude information. The work content estimator reads the position information of the worker from the position information storage, and repeatedly reads the position information of the worker until the worker is determined to have entered any one work start region. When the worker has entered one work start region, the work is determined to have started. When there is an intermediate process, an intermediate process determination step is performed.

The work start region has a certain stretch. The work start regions of a plurality of works may overlap entirely or partially. The work content estimator may provide the worker terminal with a means of enabling the worker to select any one work when the position information of the worker is determined to indicates that the worker has entered the overlapping work start region. When a work is selected, the work content estimator manages the progress of a subsequent work according to the selected work.

### (Work content estimator - intermediate process determination)

The work content estimator includes an intermediate process determination step of comparing the position information of the worker with position information of a region in which the worker has to be positioned at the time of intermediate process and determining whether or not the worker has performed the intermediate process.

When the work is determined to have started, and the intermediate process for the started work is defined in the standard work storage, the work content estimator reads position information of a region (an intermediate process region) in which the worker has to be positioned at the time of intermediate process from the standard work storage. The work content estimator repeatedly reads the position information of the worker from the position information storage until the worker is determined to have entered the intermediate process region. When the worker is determined to have entered the intermediate process region, the intermediate process is estimated to have been performed, and an intermediate completion flag of the work instruction storage is set. When there are a plurality of intermediate processes, the intermediate process determination step is repeated based on position information of a next worker.

The determination as to whether or not the worker is in the intermediate process region may be performed in the same manner as the determination as to whether or not the worker is in a predetermined region.

### (Work content estimator - work completion determination)

The work content estimator includes a work completion determination step of comparing the position information of the worker with position information of a region in which the worker has to be positioned after the work is completed and determining whether or not the worker has completed the work.

When all the intermediate processes are determined to have been performed, the work content estimator reads position information of a region (a work completion region) in which the worker has to be positioned after the work is completed from the standard work storage. The work content estimator repeatedly reads the position information of the worker from the position information storage until the worker is determined to have entered the work completion region. When the worker is determined to have entered the work completion region, a standard work period of time determination step is performed.

The determination as to whether or not the worker is in the work completion region may be performed in the same manner as the determination as to whether or not the worker is in a predetermined region.

### (Work content estimator - standard work period of time determination)

The work content estimator includes the standard work period of time determination step of comparing an elapsed time for completing the work after the worker starts the work with the standard work period of time of the work and determining reasonableness of a period of time required for the work.

The work content estimator measures an elapsed time until the worker enters the work completion region after the work is determined to have started. The work content estimator reads the standard work period of time required for the work from the standard work storage. When the elapsed time is within a predetermined error range of the standard work period of time, the work is estimated to have been normally completed, and a work completion confirmation step is performed.

An error of the standard work period of time may be arbitrarily set by the supervisor.

A standard period of time from the work start to the intermediate process may be set. In this case, a period of time that normally elapses until the intermediate process is stored in the standard work storage. The same determination as in the standard work period of time determination step may be performed on the intermediate process.

### (Work content estimator - work completion confirmation)

The work content estimator includes the work completion confirmation step for confirming completion of the work based on the work completion confirmation performed by the worker.

When the work is determined to have been normally completed, the work content estimator writes the work in the completion estimation flag of the work instruction storage. The work content estimator extracts the work written in the completion estimation flag of the work instruction storage and causes the extracted work to be displayed on the worker terminal. The worker confirms the completed work based on the displayed work content and inputs completion for the work that has been actually completed. When the completion is input, the work content estimator sets the completion flag to the work instruction storage.

When the elapsed time until the work is completed after the worker starts the work is significantly smaller than the standard work period of time, since it is estimated that it is difficult to compete the work, the process may not proceed to a next step, and the completion estimation flag may not be set.

The work content estimator may cause the work in which the completion estimation flag is not set to be displayed on the worker terminal as well. The worker confirms content of the work in which the completion estimation flag is not set and inputs completion of the work for the work that has been actually completed. When the completion is input, the work content estimator sets the completion flag in the work instruction storage.

The supervisor may check whether or not the instructed work content has been completed based on information of the completion estimation flag and the completion flag written in the work instruction storage from the server. In other words, the supervisor extracts the work in which the completion estimation flag is not set, the work in which the completion estimation flag is set, but the completion flag is not set, or the like, contacts the worker who is instructed to do each work, and checks whether or not the instructed work content has been completed. The supervisor may directly write the completion flag in the work instruction storage.

### (Work content estimator - writing to worker management information storage)

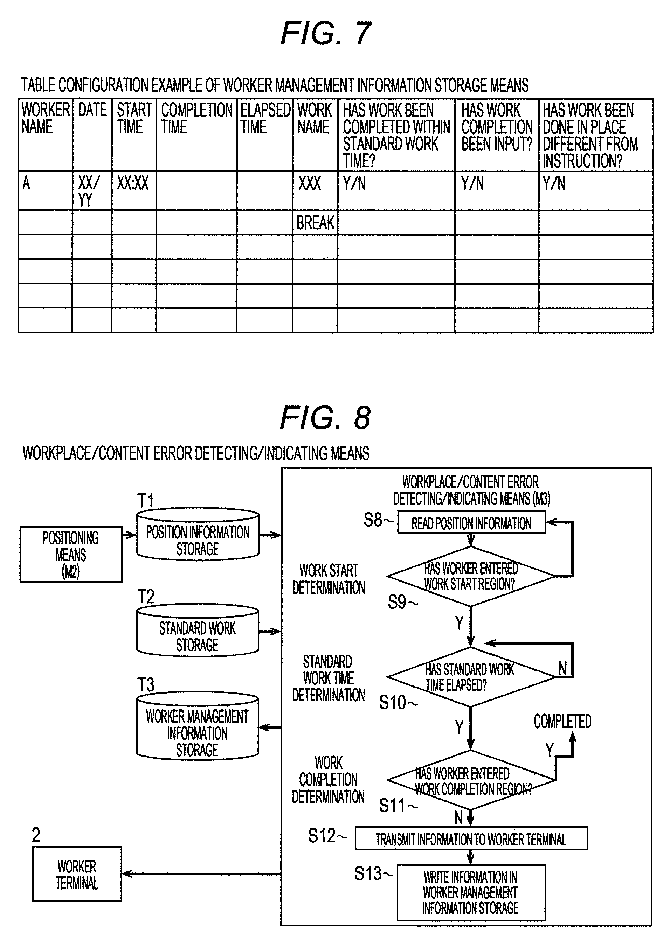

The work content estimator writes various kinds of information in the worker management information storage as well. Fig. 7 illustrates a table configuration example of the worker management information storage. In other words, at the same time as when the completion estimation flag is written, it is determined whether or not the work has been completed within the standard work period of time, and the determination result is written in the corresponding item. Further, when the worker has reported completion of the work, information indicating that the completion of the work has been reported is written in the corresponding item. The supervisor may evaluate the worker according to whether or not the completion situation of the worker has been written.

The work content estimator determines the work start as described above but may determine that the worker is taking a break according to the position of the worker. In other words, the break is supposed to be taken in a specific place, and position information of a rest place is stored in the standard work storage. When the worker is determined to enter the reset place based on the position information of the worker, measurement of a period of time serving as a break period of time starts.

Thereafter, the position information of the worker is continuously read, and when the worker is determined to leave the rest place, the measurement of the break period of time is completed. The break period of time is written in the work instruction storage.

### (Work place/content error detector and instructor)

At least one of the server and the worker terminal includes a work place/content error detector and instructor. Fig. 8 illustrates the work place/content error detection and instructor. The work place/content error detector and instructor is a means that gives the worker a notification when the worker is determined to be in a place different from a place of position information in which the worker has to be originally positioned based on the work instruction.

The work place/content error detector and instructor reads the position of the worker from the position information storage. Further, the work place/content error detector and instructor reads information related to the work start region, the intermediate process region, and the work completion region of the worker from the work instruction storage. The work place/content error detector and instructor determines whether or not the position information of the worker indicates that the worker is in the intermediate process region or the work completion region. As a determining timing, when the standard work period of time is set to the intermediate process, it is determined whether or not the worker is in the intermediate process region after the standard work period of time corresponding to the intermediate process elapses. It is determined whether or not the position information of the worker indicates that the worker is in the work completion region when the standard work period of time elapses after the work start determination. When the position information of the worker is determined not to indicate the worker is in the intermediate process region or the work completion region, information indicating that the worker is in a different place from the place indicated by the work instruction may be displayed on the worker terminal.

Upon receiving the information indicating that he/she is in the different place from the place indicated by the work instruction, the worker confirms the work instruction, and confirms the accuracy of his/her own work content.

Further, when the work is determined not to be in the work completion region after the standard work period of time elapses, the work place/content error detector and instructor writes information indicating that the worker is not in the work completion region in the worker management information storage. In other words, information indicating that the worker went to the different place from the place indicated by the instruction is written.

### (Worker evaluator)

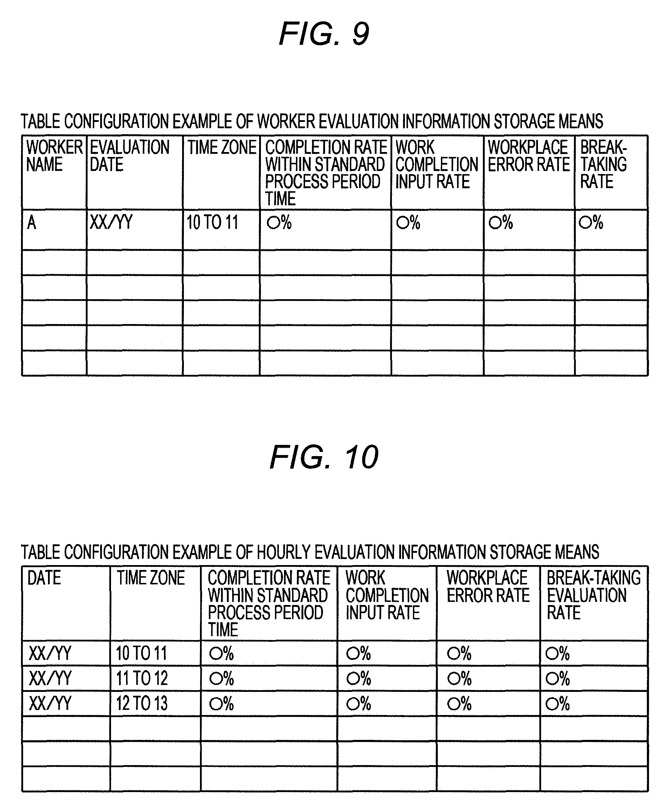

The server is equipped with a worker evaluator. The worker evaluator generates worker evaluation information based on information of the worker management information storage illustrated in Fig. 9, and records the worker evaluation information in the worker evaluation information storage. In other words, the worker management information storage stores information indicating whether or not the work has been completed within the standard work period of time, information indicating whether or not the work completion report has been performed, and information indicating whether or not the worker has gone to the different place from the place indicated by the instruction for each work of the worker.

The worker evaluator adds up the information hourly, daily, and monthly, generates the evaluation information, and writes the evaluation information in the worker evaluation information storage. For example, a completion rate within a standard work period of time, a work completion input rate, and a work place error rate of each date of the worker are calculated and written as illustrated in Fig. 9. The work instruction storage stores a period of time in which each worker has taken a break. The worker evaluator evaluates whether or not the worker has taken a break as indicated by the work instruction and then writes the evaluation result in the worker evaluation information storage.

### (Hourly evaluation information storage)

The server includes an hourly evaluator. Hourly evaluation information is used for the purpose of determining a situation of each worker or all the workers in units of time zones. In other words, the worker may work long hours. In this case, since work efficiency decreases over time, it is one of businesses of the supervisor to understand hourly work efficiency or an hourly break-taking rate.

The hourly evaluator, as illustrated in the table configuration example of a worker evaluation information storage of Fig. 10, adds up hourly data using information of the completion rate within the standard work period of time, the work completion input rate, the work place error rate, and the break-taking rate calculated for each worker, and calculates the same indices for all the time zones. In other words, statistical information including an average and a variation is calculated and written in the hourly evaluation information storage.

### (Break indicator)

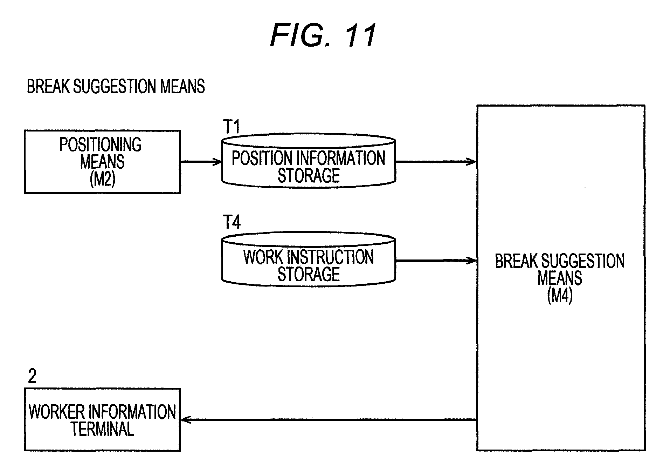

At least one of the server and the worker terminal includes a break indicator. Fig. 11 illustrates the break indicator. The break indicator starts measurement of a continuous work period of time after the break ends. In other words, a business period of time of the worker is configured such that a work, a break, a work, and a break are intermittently continued. Since a period of time until a next break after a break ends is a period of time in which no break is taken, the continuous work period of time of up to the next break may be detected by starting measurement of a period of time from a point in time at which a break ends.

The standard work storage may be equipped with a storage that stores a standard continuous work period of time. A standard continuous work is a normal continuous work period of time, that is, a period of time in which a break is recommended if this period of time is exceeded. When the measured continuous work period of time is larger than the standard continuous work period of time stored in the standard work storage, the break indicator causes information indicating a break to be displayed on the worker terminal and urges the worker to take a break.

### REFERENCE SIGNS LIST

- 1: worker terminal
- 2: server
- T1: position information storage
- T2: standard work storage
- T3: worker management information storage
- T4: work instruction storage
- S1: position information reading step
- S2: work start determination step
- S3: intermediate process determination step
- S4: standard work period of time determination step
- S5: work completion determination step
- S6: completion estimation flag writing step
- S7: work completion confirmation step
- S8: position information reading step
- S9: work start determination step
- S10: standard work period of time determination step
- S11: work completion determination step
- S12: transmission step to worker terminal
- S13: writing step to worker management information storage
- M 1: work content estimator
- M2: position measurer
- M3: work place/content error detector and instructor
- M4: break indicator

## Claims

1. A work progress situation management system, comprising:
a worker terminal including a position measurer, an inputter/outputer, a storage, and a communicator; and
a server including an inputter/outputer, a storage, and a communicator,
wherein at least one of the server and the worker terminal includes
a work instruction storage that stores work instruction information including position information before a work of work content to be performed by a worker starts, position information after the work is completed, and position information of an intermediate process when there is the position information of the intermediate process, and
a work content estimator that determines a progress situation of the work based on the work instruction information and position information of the worker terminal, and writes information related to the progress situation of the work in the work instruction storage.

2. The work progress situation management system according to claim 1,
wherein the work content estimator includes
a work start determination step of determining whether or not the worker has entered a work start region based on the position information of the worker terminal,
an intermediate process determination step of determining whether or not the worker has entered an intermediate process region based on the position information of the worker terminal when the work instruction information includes the position information of the intermediate process of the work,
a work completion determination step of determining whether or not the worker has entered a work completion region based on the position information of the worker terminal, and
a standard work period of time determination step of determining whether or not the work has been completed within a standard work period of time of the work content to be performed by the worker.

3. The work progress situation management system according to claim 1 or 2,
wherein the work content estimator includes a displayer that causes information estimating that the work has been completed to be displayed on the worker terminal when the work is determined to have been completed,
the worker terminal includes a work completion inputter that confirms and inputs completion of the work that is estimated to have been completed, and
the work content estimator writes information related to work completion in the work instruction storage when the work completion confirmation input is performed.

4. The work progress situation management system according to any one of claims 1 to 3,
wherein the work content estimator includes a displayer that causes information indicating that a different work from an instruction has been performed to be displayed on the worker terminal when the worker has performed the different work from the instruction based on the work instruction information and the position information of the worker terminal.

5. The work progress situation management system according to any one of claims 1 to 4,
wherein the work content estimator writes information indicating that a break has been taken in the work instruction storage when the worker is determined to have taken the break based on the work instruction information and the position information of the worker terminal.

6. The work progress situation management system according to any one of claims 1 to 5, wherein the server includes
a calculator that calculates at least one or more of statistical information indicating whether or not the work has been completed within the standard work period of time, statistical information indicating whether or not the work completion has been input, statistical information indicating whether or not the worker has gone to a different place from a work instruction, and statistical information indicating whether or not the break has been taken according to the work instruction, and
a writter that writes respective calculation results in a worker management information storage.
